# EUROPEAN PATENT SPECIFICATION

(11) **EP 2 837 662 B1**
(45) Date of publication and mention of the grant of the patent: **21.03.2018**
(21) Application number: 12874018.0
(22) Date of filing: 28.12.2012
(51) Int. Cl.: C08J 5/18, C08K 5/09, C08K 5/12, C08K 5/10, C08K 5/00, C08K 5/103, C08K 5/29, C08L 67/04, C08L 33/06

(54) **BIODEGRADABLE RESIN COMPOSITION CONTAINING ECO-FRIENDLY PLASTICIZER, AND BIODEGRADABLE RESIN PRODUCT USING SAME**
BIOLOGISCH ABBAUBARE HARZZUSAMMENSETZUNG MIT UMWELTFREUNDLICHEM WEICHMACHER UND BIOLOGISCH ABBAUBARES HARZPRODUKT DAMIT
COMPOSITION DE RÉSINE BIODÉGRADABLE CONTENANT UN PLASTIFIANT RESPECTUEUX DE L'ENVIRONNEMENT ET PRODUIT DE RÉSINE BIODÉGRADABLE L'UTILISANT

(30) Priority: 09.04.2012 KR 20120036606
(43) Date of publication of application: 18.02.2015
(73) Proprietor: LG Hausys, Ltd., Seoul 150-721 (KR)
(72) Inventor: NAM, Seung Baik, Cheongju-si Chungcheongbuk-do 361-864 (KR); SON, Jong-Seok, Cheongju-si Chungcheongbuk-do 361-727 (KR)
(74) Representative: Gill Jennings & Every LLP
(86) International application number: PCT/KR2012/011724
(87) International publication number: WO 2013/154255

(56) References cited:
- EP-A1- 2 799 492
- KR-A- 937 003 399
- KR-A- 20050 016 207
- KR-A- 20060 007 046
- US-A1- 2012 009 103
- US-B2- 7 786 219
- DATABASE WPI Week 200570 Thomson Scientific, London, GB; AN 2005-678557 XP002735762, -& JP 2005 239978 A (APUKO KK) 8 September 2005 (2005-09-08)
- DATABASE WPI Week 200516 Thomson Scientific, London, GB; AN 2005-145816 XP002735763, -& JP 2005 023091 A (DAIHACHI CHEM IND CO LTD) 27 January 2005 (2005-01-27)

## Description

### [Technical Field]

The present invention relates to a technique for preparing a biodegradable resin product such as a polylactic acid (PLA) resin film, and more particularly, to an eco-friendly plasticizer-containing biodegradable resin composition and a biodegradable resin product prepared therefrom.

### [Background Art]

Sheets using a petroleum resin such as polyvinyl chloride and the like are widely used in interior materials of buildings, materials for windows and doors thereof, and the like. In particular, films and sheets using PVC are widely used for flooring materials, wallpapers, decorative sheets, various interior sheets, and the like.

Since commercial resins such as PVC are prepared from petroleum, it is anticipated that such resins will become increasingly difficult to produce due to depletion of petroleum reserves and non-biodegradability of such resins will also poses an environmental problem.

In addition, considering increasing interest in environmental problems in recent years, PVC-based products have problems, such as safety problems in use, environmental problems, emission of endocrine disruptors upon disposal, and the like, due to dioctyl phthalate, which is a phthalate plasticizer, and various additives.

To resolve such problems, biodegradable resins, such as polylactic acid (PLA) resins prepared by polymerization of lactic acid extracted from plant resources, are a focus of research in recent years.

Further, as for a plasticizer, citrate plasticizers such as acetyl tributyl citrate (ATBC) and tributyl citrate (TBC) are applied.

However, the citrate plasticizers have a limit of low plasticization.

In the related art, Korean Patent Publication No. 10-2010-0000782A (published on January 06, 2010) discloses a biodegradable polylactic acid resin composition and a technique for using a supercritical fluid instead of a phthalate plasticizer.

JP2005 239 978 A discloses polyester-based biodegradable resin compositions plasticised with a benzoate plasticizer.

### [Disclosure]

### [Technical Problem]

It is one aspect of the present invention to provide a biodegradable resin composition which can improve low plasticization of citrate plasticizers while containing an eco-friendly plasticizer.

It is another aspect of the present invention to provide a resin product, which is fabricated using from the composition as set forth above, and thus exhibits excellent plasticization and can be biodegraded after disposal.

### [Technical Solution]

In accordance with one aspect of the present invention, a biodegradable resin composition includes a biodegradable resin and a benzoate plasticizer. The benzoate plasticizer is 2-(2-(2-phenylcarbonyloxyethoxy)ethoxy)ethyl benzoate.

Here, the benzoate plasticizer is present in an amount of 5 parts by weight to 50 parts by weight based on 100 parts by weight of the biodegradable resin.

In addition, the biodegradable resin composition further includes 20 parts by weight or less of an acrylic copolymer based on 100 parts by weight of the biodegradable resin.

Further, the biodegradable resin composition further includes 10 parts by weight or less of stearic acid based on 100 parts by weight of the biodegradable resin.

Furthermore, the biodegradable resin composition further includes 10 parts by weight or less of the anti-hydrolysis agent carbodiimide based on 100 parts by weight of the biodegradable resin.

The biodegradable resin may include at least one selected from polylactic acid (PLA), polyglycolic acid, polycaprolactone, aliphatic polyester, polyhydroxybutyric acid, and D-3-hydroxybutyric acid resins.

In accordance with another aspect of the present invention, a biodegradable resin product has a single layer structure or a stacked structure of two or more layers, wherein at least one selected from the layers includes said biodegradable resin composition.

### [Advantageous Effects]

According to the present invention, the biodegradable resin composition is eco-friendly since the composition does not use phthalate plasticizers, and can improve low plasticization of citrate plasticizers.

Therefore, when products, such as films, flooring materials, wallpapers and the like, are fabricated using the biodegradable resin composition according to the present invention, there is a merit in that the resin composition can be more easily molded at high temperature.

### [Best Mode]

The above and other aspects, features and advantages of the present invention will become apparent from the detailed description of the following embodiments.

However, it should be understood that the present invention is not limited to the following embodiments and may be embodied in different ways, and that the embodiments are provided for complete disclosure and thorough understanding of the invention by those skilled in the art. The scope of the invention should be defined only by the accompanying claims and equivalents thereof.

Hereinafter, exemplary embodiments of the present invention will be described in detail.

According to one embodiment of the present invention, a biodegradable resin composition includes a biodegradable resin and a benzoate plasticizer.

As described above, although a citrate plasticizer, such as acetyl tributyl citrate (ATBC) and tributyl citrate (TBC), is mainly used as an eco-friendly plasticizer, the citrate plasticizer has a problem of low plasticization. However, from results of many studies, the inventors of the present invention found that, since the benzoate plasticizer can overcome the drawback of the citrate plasticizer while securing eco-friendliness and thus can exhibit higher plasticization than typical citrate plasticizers, moldability of the resin composition can be further improved.

The benzoate plasticizer is -(2-(2-phenylcarbonyloxyethoxy)ethoxy)ethyl benzoate.

Therefore, when products such as films are fabricated using the biodegradable resin composition according to the present invention, there are merits in that the resin composition is easily processed into the products due to excellent plasticization, and can provide flexible products.

In addition, other eco-friendly plasticizers, such as citrate plasticizers and the like, may also be used together with the benzoate plasticizer.

Here, the benzoate plasticizer is present in an amount of 5 parts by weight to 50 parts by weight based on 100 parts by weight of the biodegradable resin, without being limited thereto. If the amount of the plasticizer is less than 5 parts by weight, the plasticizer cannot sufficiently act as a plasticizer. On the other hand, if the amount of the plasticizer is greater than 50 parts by weight, some of the plasticizer can leak out of a product after processing of the product.

In addition, the biodegradable resin composition according to the present invention further includes an acrylic copolymer. The acrylic copolymer acts as a melt strength enhancer and thus contributes to securing melt strength of the composition upon product processing.

When the acrylic copolymer is added, the acrylic copolymer is present in an amount of 20 parts by weight or less based on 100 parts by weight of the biodegradable resin. If the amount of the acrylic copolymer is greater than 20 parts by weight, a product can suffer from deterioration in properties such as flexibility and the like.

Further, the biodegradable resin composition according to the present invention further includes stearic acid. The higher fatty acid acts as a lubricant and thus serves to improve lubricity and processability upon product processing.

When the stearic acid is added, the stearic acid is present in an amount of 10 parts by weight or less based on 100 parts by weight of the biodegradable resin. If the amount of the stearic acid is greater than 10 parts by weight, a prepared biodegradable resin product can suffer from deterioration in impact resistance, gloss, and the like.

Furthermore, the biodegradable resin composition according to the present invention further includes the anti-hydrolysis agent carbodiimide. The anti-hydrolysis agent suppresses hydrolysis in the composition and thus contributes to improvement of water resistance of a prepared biodegradable resin product.

When the anti-hydrolysis agent is added, the anti-hydrolysis agent is present in an amount of 10 parts by weight or less based on 100 parts by weight of the biodegradable resin. If the amount of the anti-hydrolysis agent is greater than 10 parts by weight, a prepared biodegradable resin product can suffer from deterioration in moldability.

The acrylic copolymer, stearic acid and the anti-hydrolysis agent are used in combination thereof.

According to the present invention, the biodegradable resin may be any resin without limitation so long as the resin is biodegradable. The biodegradable resin may include at least one selected from polylactic acid (PLA), polyglycolic acid, polycaprolactone, aliphatic polyester, polyhydroxybutyric acid, and D-3-hydroxybutyric acid resins. Here, the biodegradable resin is preferably a PLA resin exhibiting properties similar to a commercial resin such as a polyethylene terephthalate (PET) resin.

As described above, the biodegradable resin composition according to the present invention is eco-friendly since the composition does not use a non-phthalate plasticizer, and can exhibit excellent moldability at high temperature while securing biodegradability by improving low plasticization of the citrate plasticizers.

According to the present invention, biodegradable resin products, such as films, flooring materials, wallpapers and the like, can be fabricated through a process such as melt extrusion, calendering, pressing, and the like.

According to the present invention, the biodegradable resin product may have a single layer structure or a stacked structure in which two or more layers are laminated. Here, at least one selected from the layers of the biodegradable resin product includes a biodegradable resin and a plasticizer, wherein the plasticizer is a benzoate plasticizer.

In addition, as described above, the benzoate plasticizer is 2-(2-(2-phenylcarbonyloxyethoxy)ethoxy)ethyl.

Further, other eco-friendly plasticizers may also be used in conjunction with the benzoate plasticizer.

Furthermore, the benzoate plasticizer is present in an amount of 5 parts by weight to 50 parts by weight based on 100 parts by weight of the biodegradable resin.

### EXAMPLE

Next, the present invention will be explained in more detail with reference to some examples. It should be understood that these examples are provided for illustration only and are not to be in any way construed as limiting the present invention.

A description of details apparent to those skilled in the art will be omitted for clarity.

### 1. Preparation of film using resin composition

### Comparable Example 1

A 0.5 mm thick film was prepared by calendering at a temperature of 110°C using a composition composed of 100 parts by weight of a PLA resin and 20 parts by weight of 2-(2-(2-phenylcarbonyloxyethoxy)ethoxy)ethyl benzoate as a plasticizer.

### Comparable Example 2

A 0.5 mm thick film was prepared by calendering at a temperature of 105°C using a composition composed of 100 parts by weight of a PLA resin, and 15 parts by weight of glyceryl tribenzoate and trimethylolpropane tribenzoate as a plasticizer.

### Comparable Example 3

A film was prepared in the same manner as in Comparable Example 1 except that the composition further included 10 parts by weight of an acrylic copolymer.

### Example 1

A film was prepared in the same manner as in Comparable Example 1 except that the composition further included 10 parts by weight of an acrylic copolymer, 5 parts by weight of stearic acid as a higher fatty acid, and 5 parts by weight of carbodiimide as an anti-hydrolysis agent.

### Comparative Example 1

A film was prepared in the same manner as in Comparable Example 1 except that 20 parts by weight of dioctyl phthalate, which is a phthalate plasticizer, was used as the plasticizer.

### Comparative Example 2

Using 100 parts by weight of a PLA resin and 20 parts by weight of acetyl tributyl citrate (ATBC), which is a citrate plasticizer, as a plasticizer, a 0.5 mm thick film was prepared by calendering at a temperature of 140°C.

### Comparative Example 3

A film was prepared in the same manner as in Comparative Example 2 except that calendering was performed at a temperature of 110°C.

### 2. Property Evaluation

### (1) Crumbling

For each of the films of Comparable Examples 1 to 3, Example 1 according to the invention and Comparative Examples 1 to 3, whether the film suffered from crumbling was observed with the naked eye.

The films of Examples 1 to 4 and Comparative Examples 1 to 2 did not suffer from crumbling. However, the film of Comparative Example 3 suffered from crumbling.

This means that, since the resin composition of Comparative Example 3 exhibited low plasticization, the resin product prepared therefrom suffered from deterioration in properties when the resin composition was not heated to a sufficiently high temperature.

### (2) Strength

For each of the films of Comparable Examples 1 to 3, Example 1 and Comparative Examples 1 to 2, impact strength and tensile strength were measured. Results are shown in Table 1.

Impact strength (unit: kg·cm/cm) was measured in accordance with ASTM D256.

In addition, tensile strength (unit: kgf/cm²) was measured in accordance with KS M3802.

**Table 1**

| Item | Comparable Example | | | Example | Comparative Example | |
|---|---|---|---|---|---|---|
| | 1 | 2 | 3 | 1 | 1 | 2 |
| Impact strength (Kg·cm/cm) | 8.7 | 8.4 | 9.2 | 9.3 | 9.0 | 7.8 |
| Tensile strength (kgf/cm²) | 84.3 | 86.2 | 90.7 | 94.6 | 87.7 | 74.1 |

As shown in Table 1, the films of Comparable Examples 1 to 3 and Example 1 according to the present invention exhibited excellent impact strength and tensile strength, although the films of Comparable Examples 1 to 3 and Example 1 were processed at lower temperatures than the film of Comparative Example 2. This means that, when the benzoate plasticizer according to the present invention is used, plasticization of the PLA resin can be further improved.

In addition, referring to Table 1, it can be seen that the films of Comparable Examples 1 to 3 and Example 1 exhibited strength properties similar to those of the film of Comparative Example 1 using a commercial phthalate plasticizer.

That is, a product prepared using the biodegradable resin composition according to the present invention can exhibit eco-friendliness and equivalent strength to products using a phthalate plasticizer even without using the phthalate plasticizer, and can exhibit excellent strength even at a lower temperature than a product using a citrate plasticizer.

## Claims

1. A biodegradable resin composition comprising: a biodegradable resin and a benzoate plasticizer,
wherein the benzoate plasticizer is 2-(2-(2-phenylcarbonyloxyethoxy)ethoxy)ethyl benzoate and wherein the benzoate plasticizer is present in an amount of 5 parts by weight to 50 parts by weight based on 100 parts by weight of the biodegradable resin,
the resin composition further comprising: 20 parts by weight or less of an acrylic copolymer, 10 parts by weight or less of stearic acid and 10 parts by weight or less of a carbodiimide anti-hydrolysis agent based on 100 parts by weight of the biodegradable resin.

2. The resin composition according to claim 1, wherein the biodegradable resin comprises at least one selected from polylactic acid (PLA), polyglycolic acid, polycaprolactone, aliphatic polyester, polyhydroxybutyric acid, and D-3-hydroxybutyric acid resins.

3. A biodegradable resin product having a single layer structure or a stacked structure of two or more layers, wherein at least one selected from the layers comprises a biodegradable resin composition according to claim 1 or claim 2.

## Patentansprüche

1. Eine biologisch abbaubare Harzzusammensetzung umfassend: ein biologisch abbaubares Harz und einen Benzoat-Weichmacher,
wobei der Benzoat-Weichmacher ein 2-(2-(2-Phenylcarbonyloxyethoxy)ethoxy)ethyl-Benzoat ist, und wobei der Benzoat-Weichmacher in einer Menge von 5 Gewichtsanteilen bis 50 Gewichtsanteilen basierend auf 100 Gewichtsanteilen des biologisch abbaubaren Harzes vorhanden ist,
wobei die Harzzusammensetzung zudem Folgende umfasst: 20 Gewichtsanteile oder weniger eines Acrylpolymers, 10 Gewichtsanteile oder weniger einer Stearinsäure und 10 Gewichtsanteile oder weniger eines Carbodiimid-Hydrolyseschutzmittels basierend auf 100 Gewichtsanteilen des biologisch abbaubaren Harzes.

2. Die Harzzusammensetzung entsprechend Anspruch 1, wobei das biologisch abbaubare Harz zumindest eines derer umfasst, die aus Folgenden ausgewählt werden, nämlich polylaktische Säure (PLA), Polyglycolsäure, Polycaprolacton, aliphatischer Polyester, Polyhydroxybuttersäure und D-3-Hydroxybuttersäureharze.

3. Ein biologisch abbaubares Harzprodukt mit einer einschichtigen Struktur oder einer geschichteten Struktur mit zwei oder mehreren Schichten, wobei zumindest eine der von den Schichten gewählten eine biologisch abbaubare Harzzusammensetzung entsprechend Anspruch 1 oder Anspruch 2 umfasst.

## Revendications

1. Résine biodégradable comprenant : une résine biodégradable et un plastifiant de benzoate,
dans laquelle le plastifiant de benzoate est le 2-(2-(2-phénylcarbonyloxy)éthoxy)éthyl benzoate et dans laquelle le plastifiant de benzoate est présent en une quantité de 5 parties en poids à 50 parties en poids par rapport à 100 parties en poids de la résine biodégradable,
la composition de résine comprenant par ailleurs : 20 parties en poids ou moins d'un copolymère acrylique, 10 parties en poids ou moins d'acide stéarique et 10 parties en poids ou moins d'un agent anti-hydrolysant de carbodiimide par rapport à 100 parties en poids de la résine biodégradable.

2. Composition de résine selon la revendication 1, dans laquelle la résine biodégradable comprend au moins un composé sélectionné parmi l'acide polylactique (PLA), l'acide polyglycolique, le polycaprolactone, le polyester aliphatique, l'acide polyhydroxybutyrique et des résines d'acide D-3-hydroxybutyrique.

3. Produit de résine biodégradable ayant une structure monocouche ou une structure empilée de deux ou plusieurs couches, dans lequel au moins une couche sélectionnée parmi les couches comprend une composition de résine biodégradable selon la revendication 1 ou la revendication 2.
